# EUROPÄISCHE PATENTSCHRIFT

(11) **EP 3 303 880 B1**
(45) Veröffentlichungstag und Bekanntmachung des Hinweises auf die Patenterteilung: **23.09.2020**
(21) Anmeldenummer: 16722790.9
(22) Anmeldetag: 12.05.2016
(51) Int. Cl.: F16H 37/04, F16H 3/091, F16D 23/06, F16H 61/70, F16H 61/04

(54) **GRUPPENGETRIEBE FÜR EINEN KRAFTWAGEN SOWIE VERFAHREN ZUM SCHALTEN EINES SOLCHEN GRUPPENGETRIEBES**
GROUP GEARBOX FOR A MOTOR VEHICLE AND METHOD FOR SHIFTING SUCH A GROUP GEARBOX
GROUPE-RELAIS POUR UN VÉHICULE À MOTEUR ET PROCÉDÉ POUR FAIRE FONCTIONNER UN GROUPE-RELAIS DE CE TYPE

(30) Priorität: 23.05.2015 DE 102015006806
(43) Veröffentlichungstag der Anmeldung: 11.04.2018
(73) Patentinhaber: Daimler AG, 70372 Stuttgart (DE)
(72) Erfinder: TERWEN, Stephan, 74348 Lauffen (DE); ULMER, David, 71101 Schönaich (DE)
(74) Vertreter: Moore, David Simon
(86) Internationale Anmeldenummer: PCT/EP2016/000788
(87) Internationale Veröffentlichungsnummer: WO 2016/188614

(56) Entgegenhaltungen:
- WO-A1-01/92049
- DE-A1-102007 010 827
- DE-A1-102014 016 932

## Beschreibung

Die Erfindung betrifft ein Gruppengetriebe für einen Kraftwagen, insbesondere einen Nutzkraftwagen, gemäß dem Oberbegriff von Patentanspruch 1 sowie ein Verfahren zum Schalten eines solchen Gruppengetriebes.

Aus dem allgemeinen Stand der Technik sind Gruppengetriebe für Kraftwagen, insbesondere Nutzkraftwagen, bekannt. Ein solches Gruppengetriebe umfasst ein Hauptgetriebe sowie eine dem Hauptgetriebe vorgeschaltete Schaltgruppe, welche als Splitgruppe bezeichnet wird. Die Splitgruppe ist dem Hauptgetriebe bezogen auf einen Kraft- und/oder Drehmomentenfluss durch das Gruppengetriebe vorgeschaltet, das heißt vor dem Hauptgetriebe angeordnet. Ein solches Gruppengetriebe kann auch eine sogenannte Rangegruppe umfassen, welche eine dem Hauptgetriebe nachgeschaltete Schaltgruppe ist.

Das Hauptgetriebe ist als Wechselgetriebe ausgebildet und umfasst üblicherweise eine Mehrzahl von einlegbaren beziehungsweise schaltbaren Gängen. Durch Schalten des Hauptgetriebes können die jeweiligen Gänge eingelegt werden, so dass beispielsweise von einem der Gänge in einen anderen der Gänge umgeschaltet werden kann.

Die Gänge des Hauptgetriebes unterscheiden sich üblicherweise in ihren jeweiligen Übersetzungen, wobei ein erster der Gänge eine erste Übersetzung und ein zweiter der Gänge eine zweite Übersetzung aufweist. Die zweite Übersetzung ist dabei beispielsweise geringer als die erste Übersetzung. Wird dabei vom ersten Gang in den zweiten Gang geschaltet, so wird dies als Hochschalten oder Hochschaltung des Hauptgetriebes bezeichnet. Wird umgekehrt vom zweiten Gang in den ersten Gang geschaltet, so wird dies als Rückschalten oder Rückschaltung des Hauptgetriebes bezeichnet.

Auch die Splitgruppe ist üblicherweise schaltbar. Dabei weist die Splitgruppe beispielsweise wenigstens zwei schaltbare Stufen auf. Durch Schalten der Splitgruppe wird eine der Stufen eingelegt beziehungsweise geschaltet, so dass durch Schalten der Splitgruppe die Stufe gewechselt beziehungsweise zwischen den Stufen hin- und hergeschaltet werden kann.

Durch die wenigstens zwei Stufen der Splitgruppe können die Gänge des Hauptgetriebes verdoppelt werden, so dass dann das Gruppengetriebe insgesamt eine Anzahl an Gängen aufweist, die mindestens doppelt so groß ist wie die Anzahl an Gängen des Hauptgetriebes an sich.

Umfasst das Gruppengetriebe beispielsweise sowohl eine Splitgruppe als auch eine Rangegruppe, welche jeweils zwei Stufen aufweisen, so kann die Anzahl an Gängen des Hauptgetriebes vervierfacht werden, so dass das Gruppengetriebe insgesamt eine Anzahl an schaltbaren Gängen aufweist, welche viermal so groß ist wie die Anzahl an Gängen des Hauptgetriebes alleine. Durch die Verwendung eines solchen Gruppengetriebes kann der Kraftwagen äußerst effizient betrieben sowie beispielsweise auf unterschiedlichen Fahrbahnen beziehungsweise Böden bewegt werden.

Die Stufen der Splitgruppe unterscheiden sich beispielsweise in ihren Übersetzungen. Hierbei weist eine erste der Stufen eine erste Übersetzung und eine zweite der Stufen eine zweite Übersetzung auf. Dabei ist die zweite Übersetzung beispielsweise geringer als die erste Übersetzung. Wird von der ersten Stufe in die zweite Stufe der Splitgruppe geschaltet, so wird dies als Hochschalten oder Hochschaltung der Splitgruppe bezeichnet. Wird hingegen von der zweiten Stufe in die erste Stufe der Splitgruppe geschaltet, so wird dies als Rückschaltung oder Rückschalten der Splitgruppe bezeichnet. Die Hochschaltung der Splitgruppe wird auch als Übersetzung ins Schnelle bezeichnet, wobei die Rückschaltung der Splitgruppe auch als Übersetzung ins Langsame bezeichnet wird.

Ein solches Gruppengetriebe weist üblicherweise eine hohe Komplexität, hohe Kosten sowie ein hohes Gewicht auf, da eine Vielzahl von unterschiedlichen Komponenten erforderlich ist. Insbesondere sind üblicherweise Synchronisierungselemente zum Synchronisieren von Getriebeelementen erforderlich. Unter "Synchronisieren" beziehungsweise "Synchronisation" wird insbesondere in Bezug auf Getriebe das Angleichen von Drehzahlen zweier sich drehender Getriebeelemente verstanden, welche beim Schalten des Getriebes beziehungsweise des Gruppengetriebes miteinander formschlüssig gekoppelt werden. Vor dem Schalten weisen die Getriebeelemente voneinander unterschiedliche Drehzahlen auf. Da eine formschlüssige Schaltung erfolgt, muss dieser Drehzahlunterschied durch das sogenannte Synchronisieren üblicherweise aufgehoben werden.

Eines dieser Getriebeelemente ist beispielsweise eine Schaltmuffe, welche auch als Schiebemuffe bezeichnet wird, wobei das andere Getriebeelement ein Gangrad ist. Das Gangrad ist einem Gang des Hauptgetriebes beziehungsweise einer Stufe der Schaltgruppe zugeordnet. Die Schaltmuffe ist dabei beispielsweise mit einer um eine Drehachse drehbaren Welle drehfest gekoppelt, während das Gangrad als Losrad ausgebildet und beispielsweise drehbar auf der Welle gelagert ist. Dies bedeutet, dass das Losrad auf der Welle angeordnet ist, wobei sich die Welle relativ zu dem Losrad drehen kann, wenn das Losrad nicht mit der Schaltmuffe gekoppelt ist. Beim Schalten wird die Schaltmuffe mit dem Gangrad gekoppelt, so dass dadurch das Gangrad mit der Welle über die Schaltmuffe drehfest gekoppelt wird. Üblicherweise kann ein solches Schalten nur dann stattfinden, wenn das in Eingriff zu bringende Losrad des zu schaltenden Gangs beziehungsweise der zu schaltenden Stufe und die Welle ungefähr die gleiche Drehzahl aufweisen, was im Rahmen der Synchronisierung erfolgt.

Aus den Dokumenten WO 01/92049 A1, DE 10 2007 010827 A1, DE 10 2014 016932 A1 ist jeweils ein Verfahren zum Schalten eines Gruppengetriebes, insbesondere Schaltverfahren zur Schaltung innerhalb einer Hauptgruppe eines Gruppengetriebes, bekannt.

Aufgabe der vorliegenden Erfindung ist es, ein Gruppengetriebe der eingangs genannten Art sowie ein Verfahren zu schaffen, mittels welchen das Gruppengetriebe besonders gewichts- und kostengünstig ausgestaltet werden kann bei gleichzeitiger Realisierung einer vorteilhaften Schaltbarkeit des Gruppengetriebes.

Diese Aufgabe wird durch ein Gruppengetriebe mit den Merkmalen des Patentanspruchs 1 sowie durch ein Verfahren mit den Merkmalen des Patentanspruchs 8 gelöst. Vorteilhafte Ausgestaltungen mit zweckmäßigen Weiterbildungen der Erfindung sind in den übrigen Ansprüchen angegeben.

Um ein Gruppengetriebe der im Oberbegriff des Patentanspruchs 1 angegebenen Art derart weiterzuentwickeln, dass das Gruppengetriebe besonders gewichts- und kostengünstig ausgestaltet werden kann bei gleichzeitiger Realisierung einer vorteilhaften Schaltbarkeit des Gruppengetriebes, ist es erfindungsgemäß vorgesehen, dass die Splitgruppe für Hochschaltungen der Splitgruppe synchronisiert und für Rückschaltungen der Splitgruppe unsynchronisiert ist. Darunter ist zu verstehen, dass für Hochschaltungen der Splitgruppe eine Synchronisiereinrichtung vorgesehen ist, mittels welcher bei Hochschaltungen der Splitgruppe Getriebeelemente der Splitgruppe synchronisiert, das heißt in ihrer Drehzahl angeglichen werden. Für Rückschaltungen der Splitgruppe jedoch umfasst die Splitgruppe - im Gegensatz zu Hochschaltungen - keine Synchronisiereinrichtung, so dass die Splitgruppe und somit das Gruppengetriebe insgesamt konstruktiv besonders einfach, kosten- und gewichtsgünstig sowie robust ausgestaltet werden können. Durch Realisieren eines bestimmten Schaltablaufs bei Rückschaltungen der Splitgruppe ist es jedoch dennoch möglich, Schaltungen der auch als Vorschaltgruppe bezeichneten Splitgruppe mit höherer oder zumindest gleicher Performance beziehungsweise Leistungsfähigkeit wie bei einer Vollsynchronisierung zu realisieren. Unter einer Vollsynchronisierung ist zu verstehen, dass die Splitgruppe sowohl für Hochschaltungen als auch für Rückschaltungen der Splitgruppe jeweilige Synchronisiereinrichtungen umfasst, was erfindungsgemäß jedoch nicht vorgesehen ist. Erfindungsgemäß umfasst die Splitgruppe lediglich für Hochschaltungen eine Synchronisiereinrichtung, während die Splitgruppe für Rückschaltungen keine Synchronisiereinrichtung umfasst. Die Splitgruppe ist somit erfindungsgemäße teilsynchronisiert.

Insbesondere ist es möglich, bei dem erfindungsgemäßen Gruppengetriebe Hochschaltungen der Splitgruppe mit gleicher Performance wie bei einer Vollsynchronisierung und Rückschaltungen mit höherer Performance als bei Vollsynchronisierungen zu realisieren bei gleichzeitiger Nutzung von Kosten- und Gewichtsvorteilen aufgrund des Entfalls der üblicherweise für Rückschaltungen vorgesehenen Synchronisiereinrichtung. Rückschaltungen beziehungsweise eine Rückschaltung der Splitgruppe kann beispielsweise dadurch besonders schnell und somit mit einer hohen Performance durchgeführt werden, weil das Öffnen einer Anfahrkupplung, über welche die Splitgruppe, insbesondere eine Eingangswelle der Splitgruppe, mit einem Antriebsaggregat koppelbar ist, unterbleibt. Mit anderen Worten wird auf das Öffnen der Anfahrkupplung verzichtet.

Die zuvor genannte Performance von Schaltungen, insbesondere Hochschaltungen und Rückschaltungen, der Splitgruppe bezieht sich dabei auf den Zeitbedarf für Schaltungen der Splitgruppe. Unter einer guten oder hohen Performance ist ein vorteilhafter, nur geringer Zeitbedarf für Schaltungen zu verstehen.

Um das Gewicht und die Kosten des Gruppengetriebes besonders gering zu halten, ist es bei einer vorteilhaften Ausgestaltung der Erfindung vorgesehen, dass das Hauptgetriebe unsynchronisiert ist. Dies bedeutet, dass das Hauptgetriebe keine Synchronisiereinrichtungen zum Angleichen von unterschiedlichen Drehzahlen von Getriebeelementen aufweist. Synchronisiereinrichtungen umfassen üblicherweise Synchronringe und/oder Reibelemente wie beispielsweise Reibkonusse, welche bei einem Entfall einer solchen Synchronisiereinrichtung ebenfalls entfallen beziehungsweise nicht vorgesehen sind.

Als besonders vorteilhaft hat es sich gezeigt, wenn die Splitgruppe genau zwei schaltbare Stufen aufweist und somit zweistufig ausgebildet ist. Hierdurch können das Gewicht, die Kosten und der Bauraumbedarf der Splitgruppe und somit des Gruppengetriebes insgesamt gering gehalten werden.

Eine weitere Ausgestaltung der Erfindung zeichnet sich dadurch aus, dass das Gruppengetriebe eine dem Hauptgetriebe nachgeschaltete Rangegruppe aufweist, welche auch als Nachschaltgruppe bezeichnet wird. Hierdurch kann auf besonders gewichts- und platzsparende Weise eine besonders hohe Anzahl an Gängen des Gruppengetriebes insgesamt geschaffen werden, so dass sich ein besonders effizienter Betrieb des Nutzkraftwagens realisieren lässt.

Als besonders vorteilhaft hat es sich gezeigt, wenn die Rangegruppe synchronisiert, insbesondere vollsynchronisiert, ist. Hierdurch können Schaltungen beziehungsweise Schaltvorgänge der Rangegruppe besonders schnell, das heißt mit einer besonders hohen Performance durchgeführt werden.

Alternativ ist es denkbar, dass die Rangegruppe unsynchronisiert ist, so dass die Kosten, das Gewicht und die Komplexität des Gruppengetriebes insgesamt besonders gering gehalten werden können.

Bei einer weiteren Ausgestaltung der Erfindung ist eine Klauenkupplung vorgesehen, mittels welcher ein drehfest mit einer Welle des Gruppengetriebes, insbesondere der Splitgruppe, verbundenes erstes Zahnrad der Splitgruppe bei der Rückschaltung der Splitgruppe mit einem drehbar auf der Welle angeordneten zweiten Zahnrad der Splitgruppe drehfest koppelbar ist. Mittels der Klauenkupplung ist es auf besonders einfache Weise möglich, das Zahnrad mit der Welle drehfest zu koppeln. Der dieser Ausgestaltung zugrundeliegende Hintergrund ist folgender: Wird üblicherweise eine Rückschaltung einer für Rückschaltungen synchronisierten und beispielsweise vollsynchronisierten Splitgruppe mit geschlossener Anfahrkupplung durchgeführt, so erfolgt üblicherweise eine Synchronisierung mittels einer befeuerten Drehzahlregelung des beispielsweise als Verbrennungsmotor ausgebildeten Antriebsaggregats. Wird dabei die Drehzahl nicht exakt eingestellt - was üblicherweise der Fall ist - so verhindert eine Sperreinrichtung einer mechanische Synchronisierung beziehungsweise Synchronisiereinrichtung das Durchschalten.

Daraus resultiert ein hoher Zeitbedarf für die Rückschaltung. Dieses Problem bestünde bei einer Klauenschaltung, das heißt bei einem Einsatz einer Klauenkupplung anstelle der mechanischen Synchronisierung beziehungsweise Synchronisiereinrichtung nicht. Jedoch besteht bei einer Klauenkupplung die Schwierigkeit, dass bei einer vollständig unsynchronisierten Splitgruppe, welche also sowohl für Hochschaltungen als auch für Rückschaltungen unsynchronisiert ist, einige Schaltungen nur unter deutlichen Performanceeinbußen möglich sind. Insbesondere bereiten Schaltungen Probleme, bei denen das Hauptgetriebe rück- beziehungsweise zurückgeschaltet und die Splitgruppe jedoch hochgeschaltet werden muss.

Diese Probleme können nun vermieden werden bei gleichzeitiger Realisierung eines geringen Gewichts und geringer Kosten des Gruppengetriebes, da die Splitgruppe zwar für Hochschaltungen synchronisiert, für Rückschaltungen jedoch unsynchronisiert ist. Mit anderen Worten liegt der Erfindung die Idee zugrunde, die Splitgruppe als eine Vorschaltgruppe zu realisieren, welche für Hochschaltungen, das heißt für Übersetzungen ins Schnelle, synchronisiert ist und für Rückschaltungen, das heißt für Übersetzungen ins Langsame, unsynchronisiert ist und hierbei vorzugsweise eine Klaue beziehungsweise eine Klauenkupplung einzusetzen. Dies kann ausgehend von üblichen Hauptgetrieben beispielsweise am einfachsten dadurch realisiert werden, dass bei üblicherweise zum Einsatz kommenden, vollständig synchronisierten Splitgruppen ein zum Synchronisieren bei Rückschaltungen vorgesehener Synchronring entfernt wird. Üblicherweise ist der Synchronring auf einer sogenannten Low-Seite der Splitgruppe angeordnet. Die Synchronisiereinrichtung zum Synchronisieren der Splitgruppe bei Hochschaltungen ist dabei auf einer sogenannten High-Seite der Splitgruppe angeordnet. Dies bedeutet, dass die vorzugsweise zweistufige Splitgruppe eine unsynchronisierte Low-Seite und eine synchronisierte High-Seite aufweist. Ferner ist es im Rahmen des Entfernens des Synchronrings auf der Low-Seite vorzugsweise vorgesehen, dass auf der Low-Seite anstelle einer üblicherweise vorgesehenen Spitzverzahnung eine Flachverzahnung zum Einsatz kommt.
Mit anderen Worten ist es bei einer vorteilhaften Ausgestaltung der Erfindung vorzugsweise vorgesehen, dass die Klauenkupplung eine Flachverzahnung aufweist. Hierdurch können die Kosten und das Gewicht des Gruppengetriebes besonders gering gehalten werden bei gleichzeitiger Realisierung einer hohen Schaltperformance der Splitgruppe und somit des Gruppengetriebes insgesamt.

Zur Erfindung gehört auch ein Verfahren zum Schalten eines erfindungsgemäßen Gruppengetriebes. Vorteilhafte Ausgestaltungen des erfindungsgemäßen Gruppengetriebes sind als vorteilhafte Ausgestaltungen des erfindungsgemäßen Verfahrens anzusehen und umgekehrt.

Bei dem erfindungsgemäßen Verfahren wird eine Rückschaltung der Splitgruppe durchgeführt, wobei eine Getriebeeingangswelle der Splitgruppe beschleunigt oder eine Vorgelegewelle des Gruppengetriebes verzögert wird. Hierdurch können Rückschaltungen der Splitgruppe besonders zeitgünstig, das heißt mit einer besonders hohen Performance durchgeführt werden, obwohl die Splitgruppe für Rückschaltungen beziehungsweise auf ihrer Low-Seite unsynchronisiert ist.

Schließlich hat es sich als besonders vorteilhaft gezeigt, wenn bei der Rückschaltung der Splitgruppe ein Gangwechsel des Hauptgetriebes unterbleibt oder eine Hochschaltung des Hauptgetriebes durchgeführt wird oder eine Rückschaltung des Hauptgetriebes durchgeführt wird.

Als besonders vorteilhaft hat es sich ferner gezeigt, wenn bei einer Rückschaltung der Splitgruppe die Anfahrkupplung geschlossen ist beziehungsweise bleibt. Insbesondere wird eine reine Rückschaltung der Splitgruppe bei geschlossener Anfahrkupplung durchgeführt. Unter einer solchen reinen Rückschaltung der Splitgruppe ist zu verstehen, dass die Splitgruppe rückgeschaltet beziehungsweise zurückgeschaltet wird, während ein Schalten beziehungsweise Gangwechsel des Hauptgetriebes unterbleibt. Dabei ist vorzugsweise vorgesehen, dass mit dem Beginn des Einlegens der Übersetzung ins Langsame bereits der Aufbau des Antriebsmoments des Antriebsaggregats gestartet wird.

Dadurch ist es möglich, bei reinen Rückschaltungen der Splitgruppe eine besonders hohe Schaltperformance zu realisieren. Ferner ist es möglich, bei einem Schalten des Hauptgetriebes um eine Stufe und gleichzeitiger Rückschaltung der Splitgruppe eine besonders hohe Schaltperformance zu realisieren, beispielsweise wenn von einem zehnten in einen elften Gang des insgesamt zwölf Gänge aufweisenden Gruppengetriebes geschaltet wird. Ferner kann eine besonders hohe Robustheit des Gruppengetriebes realisiert werden, da die Splitgruppe eine Klauenkupplung aufweist, so dass zumindest teilweise, das heißt bei Rückschaltung der Splitgruppe, eine Klauenschaltung durchgeführt wird. Ferner ist es möglich, eine besonders schnelle Schaltung zwischen Direkt- und Overdrive-Gang zu ermöglichen, was wiederum das sogenannten Downspeeding bei Teillast ermöglicht, wo sich üblicherweise die Schalthäufigkeit deutlich erhöht.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Es ist auch denkbar, dass ein Gruppengetriebe für einen Kraftwagen, insbesondere einen Nutzkraftwagen ein Hauptgetriebe und eine dem Hauptgetriebe vorgeschaltete Splitgruppe aufweist, wobei die Splitgruppe für Hochschaltungen der Splitgruppe und für Rückschaltungen der Splitgruppe unsynchronisiert ausgeführt ist.

Die Zeichnung zeigt in:
- Fig. 1: eine schematische Perspektivansicht von Getriebeelementen gemäß dem Stand der Technik;
- Fig. 2: eine schematische Darstellung eines Gruppengetriebes gemäß einer ersten Ausführungsform für einen Kraftwagen, insbesondere einen Nutzkraftwagen, mit einem Hauptgetriebe und einer dem Hauptgetriebe vorgeschalteten Splitgruppe, welche für Hochschaltungen der Splitgruppe synchronisiert und für Rückschaltungen der Splitgruppe unsynchronisiert ist;
- Fig. 3: eine schematische Darstellung des Gruppengetriebes gemäß einer zweiten Ausführungsform;
- Fig.4: eine schematische Darstellung eines Gruppengetriebes, wobei Fig. 4 zur Veranschaulichung des Hintergrunds der Erfindung dient;
- Fig. 5: eine weitere schematische Darstellung eines Gruppengetriebes, wobei Fig. 5 zum Veranschaulichen des Hintergrunds der Erfindung dient;
- Fig. 6 bis 12: jeweils ein Diagramm zum Veranschaulichen eines Verfahrens zum Schalten des Gruppengetriebes gemäß Fig. 2 und 3;
- Fig. 13: eine schematische Perspektivansicht eines Gleichlaufkörpers für eine Synchronisiereinrichtung gemäß dem Stand der Technik;
- Fig. 14: eine schematische Perspektivansicht eines Gleichlaufkörpers für eine Klauenkupplung; und
- Fig. 15: ausschnittsweise eine schematische Perspektivansicht einer Kolbenstange für die Klauenkupplung.

In den Fig. sind gleiche oder funktionsgleiche Elemente mit gleichen Bezugszeichen versehen.

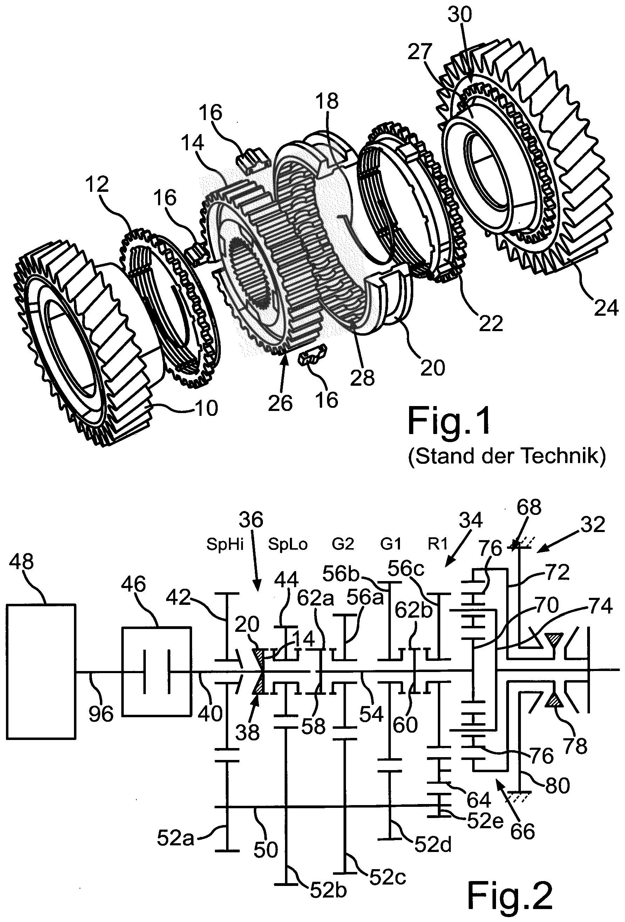

Fig. 1 zeigt in einer schematischen und perspektivischen Seitenansicht Getriebeelemente gemäß dem Stand der Technik. Die Getriebeelemente können beispielsweise für ein Getriebe eines Kraftwagens, insbesondere Nutzkraftwagens, verwendet werden. Insbesondere können die Getriebeelemente für ein Hauptgetriebe oder für eine dem Hauptgetriebe vorgeschaltete Splitgruppe eines Gruppengetriebes eines Kraftwagens, insbesondere Nutzkraftwagens, verwendet werden. Die Splitgruppe wird auch als Vorschaltgruppe bezeichnet, da sie dem Hauptgetriebe des Gruppengetriebes vorgeschaltet ist.

Bei einem ersten der in Fig. 1 gezeigten Getriebeelemente handelt es sich um ein Zahnrad 10, welches auch als Schaltrad oder Losrad bezeichnet wird. Das Zahnrad 10 ist beispielsweise einem Gang des Hauptgetriebes beziehungsweise einer Stufe der Vorschaltgruppe zugeordnet und dabei drehbar auf einer Welle, insbesondere einer Eingangswelle der Splitgruppe, angeordnet. Die Eingangswelle wird auch als Getriebeeingangswelle bezeichnet. Als zweites Getriebeelement ist ein Synchronring 12 vorgesehen, wobei als drittes Getriebeelement ein Synchronkörper 14 vorgesehen ist. Der Synchronkörper 14 wird auch als Schiebemuffenträger oder Gleichlaufkörper bezeichnet und ist beispielsweise mit der zuvor genannten Welle, insbesondere Eingangswelle, drehfest gekoppelt. Als weitere Getriebeelemente sind Druckstücke 16, eine Ringfeder 18, eine Schiebemuffe 20 und ein weiterer Synchronring 22 vorgesehen. Ein weiteres Getriebeelement ist ein weiteres Zahnrad 24, welches ebenfalls als Schaltrad oder Losrad bezeichnet wird. Das Zahnrad 24 ist dabei beispielsweise drehbar auf der zuvor genannten Welle, insbesondere Eingangswelle, angeordnet. Darunter ist zu verstehen, dass das Zahnrad 10 beziehungsweise 24 auf der Welle angeordnet und relativ zur Welle drehbar ist.

Das Zahnrad 24 ist beispielsweise einer ersten Stufe der Vorschaltgruppe zugeordnet und dabei beispielsweise auf einer sogenannten Low-Seite der Splitgruppe angeordnet, wobei das Zahnrad 10 beispielsweise einer zweiten Stufe der Splitgruppe zugeordnet und dabei auf einer sogenannten High-Seite der Splitgruppe angeordnet ist. Dem jeweiligen Zahnrad 10 beziehungsweise 24 ist ein Kupplungskörper zugeordnet, wobei von diesen Kupplungskörpern der dem Zahnrad 24 zugeordnete und mit 27 bezeichnete Kupplungskörper erkennbar ist.

Der Synchronkörper 14 ist ein Zahnrad, welches drehfest mit der Welle verbunden ist. Der Synchronkörper 14 weist eine außenumfangsseitige Verzahnung 26 auf, wobei die Schiebemuffe 20, welche auch als Schaltmuffe bezeichnet wird, eine mit der Verzahnung 26 korrespondierende, innenumfangsseitige Verzahnung 28 aufweist. Über die Verzahnungen 26 und 28 ist die Schiebemuffe 20 drehfest mit dem Synchronkörper 14 verbunden, wobei jedoch die Schiebemuffe 20 in axialer Richtung relativ zu dem Synchronkörper 14 verschiebbar ist, während die Verzahnungen 26 und 28 miteinander im Eingriff bleiben.

Der jeweilige Kupplungskörper weist - wie am Beispiel des Kupplungskörpers 27 erkennbar ist - eine Verzahnung 30 auf, welche auch als Schaltverzahnung bezeichnet wird. Die Schiebemuffe 20 ist zwischen einer Neutralstellung, einer ersten Schaltstellung und einer zweiten Schaltstellung in axialer Richtung relativ zum Synchronkörper 14 verschiebbar. In der Neutralstellung wirken die Verzahnungen 26 und 28 zusammen, jedoch wirkt die Verzahnung 28 weder mit der Verzahnung des Kupplungskörpers des Zahnrads 10 noch mit der Verzahnung 30 des Kupplungskörpers 27 des Zahnrads 24 zusammen, so dass weder das Zahnrad 10 noch das Zahnrad 24 über die Schiebemuffe 20 mit der Welle drehfest gekoppelt sind. In der ersten Schaltstellung befindet sich die Verzahnung 28 beispielsweise sowohl in Eingriff mit der Verzahnung 26 als auch in Eingriff mit der Verzahnung 30, wobei die Verzahnung 28 nicht mit der Verzahnung des Kupplungskörpers des Zahnrads 10 zusammenwirkt. Dadurch ist das Zahnrad 24 über die Schiebemuffe 20 und den Synchronkörper 14 drehfest mit der Eingangswelle gekoppelt, während jedoch das Zahnrad 10 nicht über die Schiebemuffe 20 mit der Eingangswelle gekoppelt ist, so dass das Zahnrad 10 relativ zur Eingangswelle (Welle) drehbar ist. Dies bedeutet, dass in der ersten Schaltstellung die erste Stufe der Splitgruppe eingelegt beziehungsweise eingeschaltet ist, während die zweite Stufe der Vorschaltgruppe ausgelegt beziehungsweise ausgeschaltet ist.

In der zweiten Schaltstellung befindet sich die Verzahnung 28 in Eingriff mit der Verzahnung 26 und in Eingriff mit der Verzahnung des Kupplungskörpers des Zahnrads 10, so dass in der zweiten Schaltstellung das Zahnrad 10 über die Schiebemuffe 20 und den Synchronkörper 14 mit der Eingangswelle drehfest gekoppelt ist. In der zweiten Schaltstellung wirkt jedoch die Verzahnung 28 nicht mit der Verzahnung 30 des Kupplungskörpers 27 des Zahnrads 24 zusammen, so dass in der zweiten Schaltstellung das Zahnrad 24 nicht über die Schiebemuffe 20 mit der Eingangswelle gekoppelt und demzufolge relativ zur Eingangswelle drehbar ist. Dies bedeutet, dass in der zweiten Schaltstellung der Schiebemuffe 20 die zweite Stufe der Splitgruppe eingelegt beziehungsweise eingeschaltet ist, während die erste Stufe ausgelegt beziehungsweise ausgeschaltet ist.

Der Synchronring 22 und der Kupplungskörper 27 sind dabei einer ersten Synchronisierungseinrichtung zugeordnet, welche auf der Low-Seite der Vorschaltgruppe angeordnet ist. Die erste Synchronisierungseinrichtung dient somit zum Synchronisieren der Splitgruppe bei Rückschaltungen der Splitgruppe, das heißt, wenn die erste Stufe eingelegt und beispielsweise die zweite Stufe ausgelegt wird. Dies bedeutet, dass die Splitgruppe für Rückschaltungen synchronisiert ist.

Der Synchronring 12 und der Kupplungskörper des Zahnrads 10 sind einer zweiten Synchronisierungseinrichtung zugeordnet, welche auf der High-Seite der Splitgruppe angeordnet ist. Die zweite Synchronisierungseinrichtung dient somit zum Synchronisieren der Splitgruppe bei Hochschaltungen der Splitgruppe, das heißt wenn die zweite Stufe der Splitgruppe eingelegt und beispielsweise die erste Stufe der Splitgruppe ausgelegt wird. Dies bedeutet, dass die Splitgruppe auch für Hochschaltungen synchronisiert ist.

Dadurch ist die Splitgruppe als vollsynchronisierte Splitgruppe ausgebildet, wodurch die Splitgruppe und somit das Gruppengetriebe insgesamt eine hohe Teileanzahl, ein hohes Gewicht und hohe Kosten aufweisen.

Unter der Synchronisierung bei Rückschaltungen der Splitgruppe ist zu verstehen, dass mittels der ersten Synchronisierungseinrichtung jeweilige Drehzahlen des Zahnrads 24 und der Eingangswelle beziehungsweise des Synchronkörpers 14 angeglichen werden. Mit anderen Worten werden mittels der ersten Synchronisierungseinrichtung Drehzahlunterschiede zwischen dem Zahnrad 24 und dem Synchronkörper 14 beziehungsweise der Eingangswelle aufgehoben. Demzufolge ist unter der Synchronisierung bei Hochschaltungen der Splitgruppe zu verstehen, dass mittels der zweiten Synchronisierungseinrichtung Drehzahlunterschiede zwischen dem Zahnrad 10 und dem Synchronkörper 14 beziehungsweise der Eingangswelle aufgehoben werden. Mit anderen Worten werden bei einer Hochschaltung der Splitgruppe die jeweiligen Drehzahlen des Zahnrads 10 und der Eingangswelle beziehungsweise des Synchronkörpers 14 angeglichen.

Fig. 2 zeigt in einer schematischen Darstellung ein Gruppengetriebe 32 gemäß einer ersten Ausführungsform für einen Kraftwagen, insbesondere eine Nutzkraftwagen, wobei die Kosten, das Gewicht und der Bauraumbedarf des Gruppengetriebes 32 besonders gering gehalten werden können bei gleichzeitiger Realisierung einer besonders vorteilhaften Schaltbarkeit des Gruppengetriebes 32. Das Gruppengetriebe 32 umfasst ein Hauptgetriebe 34 sowie eine dem Hauptgetriebe 34 vorgeschaltete Splitgruppe 36. Die vorigen Ausführungen zur Splitgruppe bezüglich Fig. 1 können ohne weiteres auf die Splitgruppe 36 übertragen werden, mit dem Unterschied, dass die Splitgruppe 36 für Hochschaltungen der Splitgruppe 36 synchronisiert und für Rückschaltungen der Splitgruppe 36 unsynchronisiert ist. Die zuvor genannte Low-Seite der Splitgruppe 36 ist in Fig. 2 mit SP LO bezeichnet, wobei die zuvor genannte High-Seite der Splitgruppe 36 mit SP HI bezeichnet ist. Dabei ist die zuvor genannte, auf der High-Seite angeordnete zweite Synchronisierungseinrichtung mit 38 bezeichnet. Aus Fig. 2 ist erkennbar, dass - im Gegensatz zu den Ausführungen zu Fig. 1 - auf der Low-Seite keine Synchronisierungseinrichtung der Splitgruppe 36 vorgesehen ist, so dass also die zuvor genannte, erste Synchronisierungseinrichtung im Gegensatz zum Stand der Technik entfällt. Dies bedeutet, dass die Splitgruppe 36 eine unsynchronisierte Low-Seite und eine synchronisierte High-Seite aufweist.

Die zuvor genannte Eingangswelle der Splitgruppe 36 ist in Fig. 2 mit 40 bezeichnet. Die Splitgruppe 36 umfasst ein auf der High-Seite angeordnetes und als Losrad ausgebildetes Zahnrad 42, welches beispielsweise das Zahnrad 10 ist. Die Synchronisierungseinrichtung 38 umfasst dabei beispielsweise den Synchronring 12 und den dem Zahnrad 10 beziehungsweise 42 zugeordneten Kupplungskörper. Wie bereits zum Zahnrad 10 geschildert, ist das Zahnrad 42 als Losrad ausgebildet und dabei drehbar auf der Eingangswelle 40 angeordnet.

Ferner umfasst die Splitgruppe 36 ein auf der Low-Seite angeordnetes und als Losrad ausgebildetes Zahnrad 44, welches beispielsweise das Zahnrad 24 ist, jedoch mit dem Unterschied, dass nun auf der Low-Seite keine Synchronisierungseinrichtung vorgesehen ist, so dass dem Zahnrad 44 kein Kupplungskörper zugeordnet ist. Ferner ist auf der Low-Seite kein Synchronring vorgesehen. Das bedeutet, dass - ausgehend von dem Stand der Technik gemäß Fig. 1 - der auf der Low-Seite angeordnete Synchronring 22 und der auf der Low-Seite angeordnete Kupplungskörper 27 entfallen, so dass die Low-Seite der Splitgruppe 36 unsynchronisiert ausgebildet ist.

Das Gruppengetriebe 32 ist Bestandteil eines Antriebsstrangs, welcher eine als Trennkupplung ausgebildete Anfahrkupplung 46 umfasst. Ferner umfasst der Antriebsstrang ein Antriebsaggregat 48, welches auch als Antriebsmaschine bezeichnet wird. Die Antriebsmaschine beziehungsweise das Antriebsaggregat 48 ist beispielsweise eine Verbrennungskraftmaschine und dient zum Antreiben des Kraftwagens.

Die Anfahrkupplung 46 ist ein Anfahrelement, welches zwischen einer Schließstellung und wenigstens einer Offenstellung verstellbar ist. In der Schließstellung ist die Anfahrkupplung 46 geschlossen, so dass die Eingangswelle 40 über die Anfahrkupplung 46 von dem Antriebsaggregat 48 antreibbar ist. In der Offenstellung ist die Anfahrkupplung 46 geöffnet, so dass die Eingangswelle 40 vom Antriebsaggregat 48 entkoppelt ist und nicht vom Antriebsaggregat 48 angetrieben werden kann.

Wie bereits zuvor zu Fig. 1 erläutert, ist in der ersten Schaltstellung der Schiebemuffe 20 das Zahnrad 44 über die Schiebemuffe 20 und den Synchronkörper 14 drehfest mit der Eingangswelle 40 gekoppelt. Hierdurch ist die erste Stufe der Splitgruppe 36 eingelegt. In der zweiten Schaltstellung ist das Zahnrad 42 über die Schiebemuffe 20 und den Synchronkörper 14 mit der Eingangswelle 40 drehfest gekoppelt, so dass die zweite Stufe der Splitgruppe 36 eingelegt ist.

Die Splitgruppe 36 ist vorliegend zweistufig ausgebildet und umfasst genau zwei Stufen, wobei eine erste der Stufen das Zahnrad 44 und die zweite Stufe das Zahnrad 42 umfasst. Das Gruppengetriebe 32 umfasst ferner eine Vorgelegewelle 50, auf welcher Zahnräder 52a-e angeordnet sind. Die Zahnräder 52a-e sind drehfest mit der Vorgelegewelle 50 verbunden.
Aus Fig. 2 ist erkennbar, dass das Zahnrad 52a mit dem Zahnrad 42 kämmt, so dass das Zahnrad 52a der zweiten Stufe der Splitgruppe 36 zugeordnet ist. Das Zahnrad 52b kämmt mit den Zahnrad 44, so dass das Zahnrad 52b der ersten Stufe der Splitgruppe 36 zugeordnet ist. Wie zuvor zu Fig. 1 erläutert, wird bei einem Rückschalten der Splitgruppe 36 die erste Stufe eingelegt und beispielsweise die zweite Stufe ausgelegt, wobei bei einem Hochschalten der Splitgruppe 36 die zweite Stufe eingelegt und beispielsweise die erste Stufe ausgelegt wird. Die Stufen der Splitgruppe 36 unterscheiden sich in ihren jeweiligen Übersetzungen, wobei die zweite Stufe eine geringere Übersetzung als die erste Stufe aufweist. Dies bedeutet, dass bei einer Hochschaltung der Splitgruppe 36 die Übersetzung der Splitgruppe 36 verringert wird, während bei einer Rückschaltung der Splitgruppe 36 die Übersetzung der Splitgruppe 36 erhöht wird. Daher wird die Hochschaltung auch als Übersetzung ins Schnelle bezeichnet, wobei die Rückschaltung als Übersetzung ins Langsame bezeichnet wird.

Das Hauptgetriebe 34 weist drei schaltbare beziehungsweise einlegbare Gänge G1, G2 und R1 auf und ist beispielsweise als Wechselgetriebe ausgebildet. Dies bedeutet, dass die Gänge G1, G2 und R1 eingelegt und ausgelegt werden können. Bei dem Gang G1 handelt es sich um einen ersten Vorwärtsgang, wobei es sich bei dem Gang G2 um einen zweiten Vorwärtsgang handelt. Bei dem Gang R1 handelt es sich um eine Rückwärtsgang, mittels welchem - im Gegensatz zu den Vorwärtsgängen - eine Rückwärtsfahrt des Kraftwagens bewirkt werden kann. Die Vorwärtsgänge unterscheiden sich in ihren jeweiligen Übersetzungen, wobei der Gang G1 ein erster Gang mit einer ersten Übersetzung und der Gang G2 ein zweiter Gang mit einer zweiten Übersetzung ist. Dabei ist die zweite Übersetzung geringer als die erste Übersetzung. Unter einem Hochschalten oder einer Hochschaltung des Hauptgetriebes 34 ist somit zu verstehen, dass der erste Gang G1 ausgelegt und der zweite Gang G2 eingelegt wird. Unter einem Rückschalten oder einer Rückschaltung des Hauptgetriebes 34 ist zu verstehen, dass der zweite Gang G2 ausgelegt und der erste Gang G1 eingelegt wird. Allgemein ist unter einem Hochschalten oder einer Hochschaltung des Hauptgetriebes 34 zu verstehen, dass die Übersetzung des Hauptgetriebes 34 verringert wird, wobei unter einer Rückschaltung oder einem Rückschalten des Hauptgetriebes 34 zu verstehen ist, dass die Übersetzung des Hauptgetriebes 34 erhöht wird.

Das Hauptgetriebe 34 umfasst eine Hauptwelle 54 und Zahnräder 56a-c, welche Losräder und demzufolge drehbar auf der Hauptwelle 54 angeordnet sind. Die Zahnräder 56a-c werden auch als Schalträder oder Gangräder bezeichnet, wobei das Zahnrad 56a dem zweiten Gang G2, das Zahnrad 56b dem ersten Gang G1 und das Zahnrad 56c dem Rückwärtsgang (Gang R1) zugeordnet ist.

Mit der Hauptwelle 54 sind weitere Zahnräder 58 und 60 des Hauptgetriebes 34 drehfest verbunden, wobei das Hauptgetriebe 34 ferner Schiebemuffen 62a, b umfasst. Die Schiebemuffe 62a ist relativ zum Zahnrad 58 in axialer Richtung verschiebbar und mit dem Zahnrad 58 drehfest gekoppelt. Dabei ist die Schiebemuffe 62a zwischen einer Schaltstellung und einer Neutralstellung verschiebbar. In der Schaltstellung ist das Zahnrad 56a über die Schiebemuffe 62a drehfest mit dem Zahnrad 58 und somit mit der Hauptwelle 54 verbunden. In der Neutralstellung der Schiebemuffe 62a ist das Zahnrad 56a vom Zahnrad 58 und somit von der Hauptwelle 54 entkoppelt, so dass das Zahnrad 56a relativ zur Hauptwelle 54 drehbar ist. Die Schiebemuffe 62b ist zwischen zwei Schaltstellungen und einer Neutralstellung in axialer Richtung relativ zum Zahnrad 60 verschiebbar und ist mit dem Zahnrad 60 drehfest gekoppelt. In der Neutralstellung der Schiebemuffe 62b sind sowohl das Zahnrad 56b als auch das Zahnrad 56c vom Zahnrad 60 und somit von der Hauptwelle 54 entkoppelt, so dass die Zahnräder 56b und 56c relativ zur Hauptwelle 54 gedreht werden können. In einer ersten der Schaltstellungen der Schiebemuffe 62b ist beispielsweise das Zahnrad 56b über die Schiebemuffe 62b mit dem Zahnrad 60 und somit der Hauptwelle 54 drehfest gekoppelt, so dass dann der erste Gang G1 eingelegt ist. In der zweiten Schaltstellung der Schiebemuffe 62b ist das Zahnrad 56c über die Schiebemuffe 62b mit dem Zahnrad 60 und somit der Hauptwelle 54 drehfest gekoppelt, so dass dann der Rückwärtsgang eingelegt wird. Befindet sich die Schiebemuffe 62a in ihrer Schaltstellung, so ist das Zahnrad 56a über die Schiebemuffe 62a mit dem Zahnrad 58 und mit der Hauptwelle 54 gekoppelt, so dass dann der zweite Gang G2 eingelegt ist.

Aus Fig. 2 ist erkennbar, dass das Zahnrad 52c mit dem Zahnrad 56a kämmt, so dass das Zahnrad 52c wie das Zahnrad 56a ein Gangrad und dem zweiten Gang G2 zugeordnet ist. Das Zahnrad 52d kämmt mit dem Zahnrad 56b, so dass das Zahnrad 52d wie das Zahnrad 56b ein Gangrad und dem ersten Gang G1 zugeordnet ist. Das Zahnrad 52e kämmt mit einem Zahnrad 64, welches wiederum mit dem Zahnrad 56c kämmt. Somit sind die Zahnräder 52e, 64 und 56c dem Rückwärtsgang (Gang R1) zugeordnet, wobei mittels des zwischen den Zahnrädern 56c und 52e angeordneten Zahnrads 64 eine Drehrichtungsumkehr zum Bewirken der Rückwärtsfahrt des Kraftwagens bewirkt wird. Je nachdem, ob das Zahnrad 42 oder das Zahnrad 44 über die Schiebemuffe 20 mit der Eingangswelle 40 gekoppelt ist, wird die Vorgelegewelle 50 über das Zahnrad 42 oder das Zahnrad 44 beziehungsweise das Zahnrad 52a oder das Zahnrad 52b angetrieben, so dass die Zahnräder 52c, 52d und 52e entweder über das Zahnrad 42 oder das Zahnrad 44 angetrieben werden. Ferner kann die Hauptwelle 54 je nach Schaltstellung oder Neutralstellung der Schiebemuffen 62a und 62b über eines der Zahnräder 56a-c angetrieben werden.

Schließlich umfasst das Gruppengetriebe 32 eine dem Hauptgetriebe 34 nachgeschaltete Rangegruppe 66, welche auch als Nachschaltgruppe bezeichnet wird. Die Rangegruppe 66 ist somit eine dem Hauptgetriebe 34 nachgeschaltete Schaltgruppe und weist vorliegend ebenso genau zwei Stufen auf, welche schaltbar, das heißt einlegbar und auslegbar sind.

Die Rangegruppe 66 umfasst dabei ein Planetengetriebe 68 mit einem Sonnenrad 70, einem Hohlrad 72, einem Planetenträger 74 und am Planetenträger 74 drehbar gelagerte Planetenräder 76, welche einerseits mit dem Hohlrad 72 und andererseits mit dem Sonnenrad 70 kämmen.

Die Rangegruppe 66 weist ebenfalls eine High-Seite und eine Low-Seite auf, wobei der Low-Seite eine erste Stufe und der High-Seite eine zweite Stufe der Rangegruppe 66 zugeordnet ist. Zum jeweiligen Einlegen und Auslegen der Stufen der Rangegruppe 66 ist ein Schaltelement 78 vorgesehen, welches beispielsweise eine Schiebemuffe oder Schaltmuffe ist. Das Schaltelement 78 ist beispielsweise zwischen zwei Schaltstellungen und einer Neutralstellung verstellbar. In einer ersten der Schaltstellungen ist das Hohlrad 72 mit einem Bremselement 80 über das Schaltelement 78 verbunden und dadurch festgelegt, so dass sich das Hohlrad 72 nicht um eine Drehachse, um die der Planetenträger 74 drehbar ist, drehen kann. In der zweiten Schaltstellung ist das Hohlrad 72 über das Schaltelement 78 mit dem Planetenträger 74 verblockt und dreht sich zusammen mit diesem um die Drehachse. In der Neutralstellung des Schaltelements 78 ist das Hohlrad 72 weder festgelegt noch mit dem Planetenträger 74 verblockt.

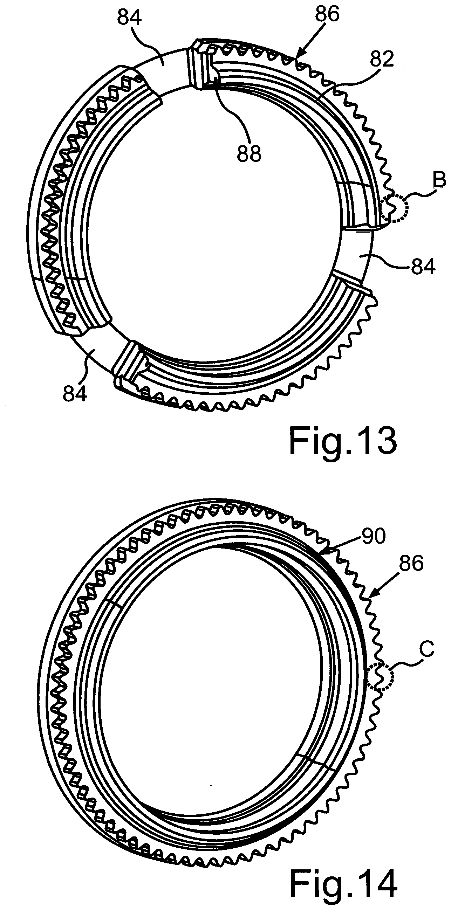

Um auf besonders einfache Weise von dem in Fig. 1 gezeigten Stand der Technik zu der Splitgruppe 36 gemäß Fig. 2 zu kommen, werden beispielsweise der Synchronring 22 der Low-Seite ebenso wie die Ringfeder 18 entfernt. Darüber hinaus bietet es sich an, die als Schaltverzahnung ausgebildete Verzahnung 30 nicht anzuspitzen und somit keinen oder einen nur geringen Dachwinkel vorzusehen, sondern die Verzahnung 30 wie bei einer Vollklaue beziehungsweise Klauenkupplung auszuführen. Mit anderen Worten ist vorzugsweise eine Klauenkupplung vorgesehen, mittels welcher das Zahnrad 42 über die Schiebemuffe 20 mit der Eingangswelle 40 drehfest koppelbar ist, wobei die Klauenkupplung vorzugsweise eine Flachverzahnung und nicht etwa eine angespitzte Verzahnung wie die Verzahnung 30 aufweist. Hierdurch kann die Splitgruppe 36 als halbsynchronisierte, das heißt teilsynchronisierte Vorschaltgruppe mit optimiertem Schaltablauf ausgestaltet werden.
Im Vergleich zum Stand der Technik ist es somit möglich, ein Synchronpaket einer zweistufigen, herkömmlichen Splitgruppe zu entfernen, wodurch Synchronringe, Synchrontaschen sowie die Anspitzung der Schiebemuffe 20 entfallen können. Dies ist besonders gut aus Fig. 13 und 14 zu erkennen. Fig. 13 zeigt einen Gleichlaufkörper 82, wie er beispielsweise bei herkömmlichen Synchronisierungseinrichtungen für herkömmliche Splitgruppen zum Einsatz kommt. Der Gleichlaufkörper 82 wird auch als Synchronkörper bezeichnet und weist Synchrontaschen 84 auf, welche bei der Splitgruppe 36 auf der Low-Seite entfallen können. Ebenso können die in einem Bereich B in Fig. 13 gezeigten Anspitzungen einer als Schaltverzahnung wirkenden Verzahnung 86 des Gleichlaufkörpers 82 entfallen. Darüber hinaus ist in Fig. 13 eine Führung 88 für eine Ringfeder erkennbar.

Fig. 14 zeigt einen Gleichlaufkörper 90, der beispielsweise auf der Low-Seite der Splitgruppe 36 in Zusammenspiel mit einer Klauenkupplung zum Einsatz kommen kann. Wie in Fig. 14 in einem Bereich C veranschaulicht, kann im Vergleich zu Fig. 13 die Anspitzung der Verzahnung 86 entfallen. Ebenso können die Synchrontaschen 84 entfallen.

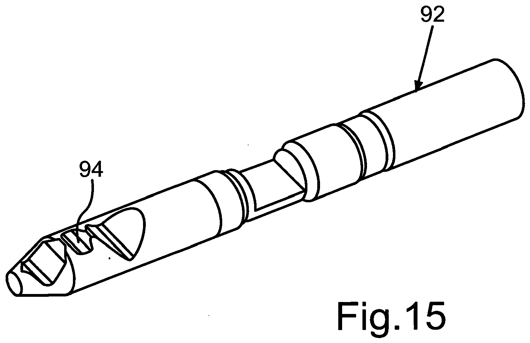

Fig. 15 zeigt eine Kolbenstange 92 zum Betätigen der Klauenkupplung, mittels welcher das Zahnrad 44 mit der Eingangswelle 40 drehfest koppelbar ist. Die Kolbenstange 92 weist dabei ein als Ausnehmung ausgebildetes Rastelement 94 auf, welches zur Rastierung und somit zur Fixierung der Kolbenstange 92 in der Neutralstellung der Schiebemuffe 20 beziehungsweise der Klauenkupplung dient.

Da die Splitgruppe 36 auf ihrer Low-Seite unsynchronisiert ist, werden Verfahren zum Schalten des Gruppengetriebes 32 vorgesehen, so dass trotz der unsynchronisierten Low-Seite besonders schnelle Schaltungen beziehungsweise Schaltvorgänge der Splitgruppe 36 und somit des Gruppengetriebes 32 insgesamt darstellbar sind. Diese Schaltvorgänge beziehungsweise Schaltabläufe hängen von der tatsächlichen Ausführungsform des Gruppengetriebes 32 ab. Die Splitgruppe 36 und die Rangegruppe 66 haben jeweils zwei Schaltstellungen, da sie jeweils genau zwei schaltbare Stufen aufweisen. Ferner weisen die Splitgruppe 36 und die Rangegruppe 66 jeweils eine Neutralstellung auf. Das Hauptgetriebe 34 hat zwei oder mehr schaltbare Gänge, welche gegebenenfalls über eine Gasse auswählbar sind. Ferner hat das Hauptgetriebe 34 eine Neutralstellung, in welcher keines der Losräder mit der Hauptwelle 54 gekoppelt ist. Befindet sich die Schiebemuffe 20 in ihrer Neutralstellung, so befindet sich die Splitgruppe 36 in ihrer Neutralstellung. Mit anderen Worten befindet sich die Splitgruppe 36 in Neutral.

Dabei ist es denkbar, dass das Gruppengetriebe 32 alternativ keine Rangegruppe aufweist. Ferner ist es denkbar, dass die Rangegruppe 66 synchronisiert oder unsynchronisiert ist.

Bei der in Fig. 2 gezeigten ersten Ausführungsform des Gruppengetriebes 32 ist das Hauptgetriebe 34 unsynchronisiert. Ferner ist die Rangegruppe 66 synchronisiert.

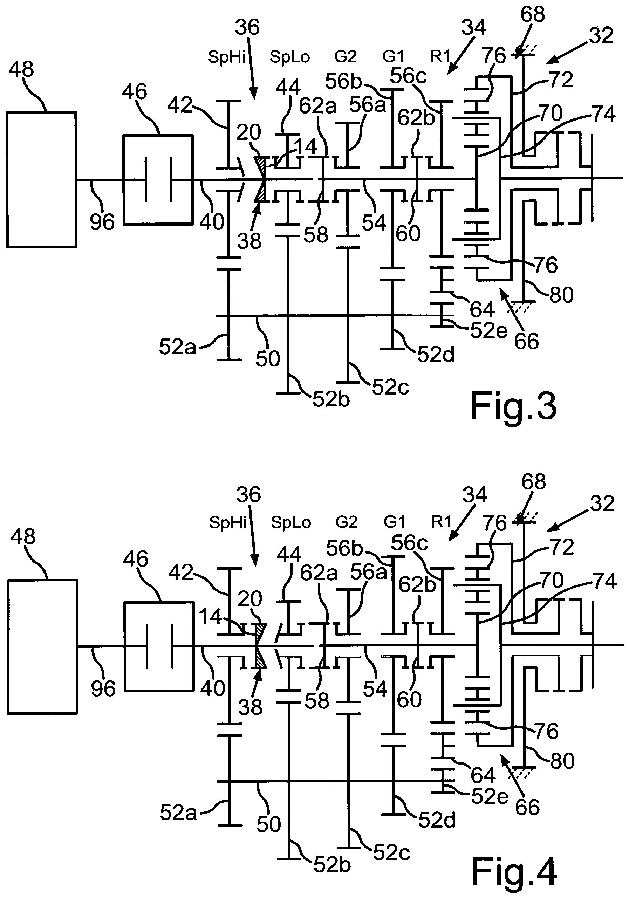

Fig. 3 zeigt eine zweite Ausführungsform des Gruppengetriebes 32, wobei sowohl die Low-Seite der Splitgruppe 36, als auch die Rangegruppe 66 und das Hauptgetriebe 34 unsynchronisiert sind. Die High-Seite der Splitgruppe 36 ist jedoch wie bei der ersten Ausführungsform synchronisiert.

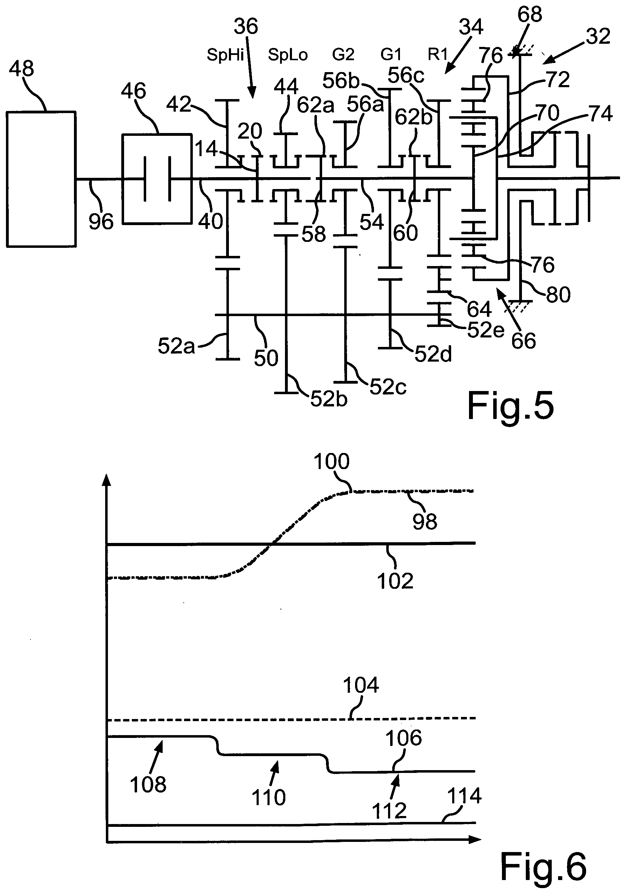

Fig. 4 veranschaulicht eine Ausführungsform des Gruppengetriebes 32, bei welcher die Low-Seite der Splitgruppe 36 synchronisiert ist. Die High-Seite der Splitgruppe 36, die Rangegruppe 66 und das Hauptgetriebe 34 sind unsynchronisiert. Ferner veranschaulicht Fig. 5 eine Ausführungsform des Gruppengetriebes 32, bei welcher die Splitgruppe 36 vollständig unsynchronisiert ist. Dies bedeutet, dass sowohl die High-Seite als auch die Low-Seite der Splitgruppe 36 unsynchronisiert sind. Ferner ist die Rangegruppe 66 unsynchronisiert. Auch das Hauptgetriebe 34 ist unsynchronisiert.

Um die auf ihrer Low-Seite unsynchronisierte Splitgruppe 36 zu schalten, wird die Eingangswelle 40 oder die Vorgelegewelle 50 oder auch beide gleichzeitig aktiv gestellt, das heißt in ihrer Drehzahl verändert. Von einer klassischen, in Fig. 2 und 3 gezeigten Getriebestruktur ausgehend, bieten sich hierzu folgende Möglichkeiten an:
- Beschleunigen des Antriebsaggregats 48 und somit der Eingangswelle 40 bei geschlossener Anfahrkupplung 46 bis eine Abregeldrehzahl des Antriebsaggregats 48 erreicht ist.
- Verzögern beziehungsweise Abbremsen des Antriebsaggregats 48 und somit der Eingangswelle 40 bei geschlossener Anfahrkupplung 46 bis eine Leerlaufdrehzahl des Antriebsaggregats 48 erreicht ist. Unter dem Beschleunigen beziehungsweise Verzögern oder Abbremsen des Antriebsaggregats 48 ist zu verstehen, dass eine beispielsweise als Kurbelwelle ausgebildete Abtriebswelle 96 des Antriebsaggregats 48 beschleunigt beziehungsweise verzögert wird. Dabei ist die Eingangswelle 40 bei geschlossener Anfahrkupplung 46 mit der Abtriebswelle 96 gekoppelt.
- Beschleunigen der Eingangswelle 40 bei schleifender Anfahrkupplung 46 mittels eines Reibmoments, wobei vorzugsweise die aktuelle Drehzahl des Antriebsaggregats 48 beziehungsweise der Abtriebswelle 96 größer als die Drehzahl der Eingangswelle 40 ist.
- Verzögern der Eingangswelle 40 bei schleifender Anfahrkupplung 46 mittels eines Reibmoments, wobei die aktuelle Drehzahl des Antriebsaggregats 48 beziehungsweise der Abtriebswelle 96 vorzugsweise kleiner als die Drehzahl der Eingangswelle 40 ist.
- Verzögern der Vorgelegewelle 50 mittels einer Vorgelegewellenbremse, mittels welcher ein Bremsmoment bereitgestellt wird. Mittels dieses Bremsmoments, welcher auf die Vorgelegewelle 50 wirkt, wird die Vorgelegewelle 50 abgebremst, das heißt in ihrer Drehzahl reduziert.
- Ausgehend von dieser klassischen Getriebestruktur gibt es keine Möglichkeit, die Vorgelegewelle 50 unabhängig von der auch als Getriebeeingang bezeichneten Eingangswelle 40 zu beschleunigen.

Vorzugsweise sind folgende Schaltungen beziehungsweise Schaltkombinationen des Gruppengetriebes 32 zu beherrschen:
- reine Hochschaltung der Splitgruppe 36, beispielsweise von der ersten Stufe in die zweite Stufe;
- reine Rückschaltung der Splitgruppe 36, beispielsweise von der zweiten Stufe in die erste Stufe. Unter einer reinen Hochschaltung oder Rückschaltung der Splitgruppe 36 ist zu verstehen, dass lediglich eine Schaltung beziehungsweise ein Schaltvorgang der Splitgruppe 36 durchgeführt wird, wobei eine Schaltung beziehungsweise ein Schaltvorgang des Hauptgetriebes 34 und vorzugsweise auch der Rangegruppe 66 unterbleibt;
- eine Rückschaltung der Splitgruppe 36 in Verbindung mit einer Ganghochschaltung, wobei beispielsweise von einem zweiten Gang in einen dritten Gang oder von einem zweiten Gang in einen fünften Gang des Gruppengetriebes 32 geschaltet wird;
- eine Hochschaltung der Splitgruppe 36 in Verbindung mit einer Gangrückschaltung, wobei beispielsweise von dem dritten Gang in den zweiten Gang oder von dem fünften Gang in den zweiten Gang des Gruppengetriebes 32 geschaltet wird;
- eine Hochschaltung der Splitgruppe 36 in Verbindung mit einer Ganghochschaltung, wobei beispielsweise von dem dritten Gang in einen sechsten Gang des Gruppengetriebes 32 geschaltet wird;
- eine Rückschaltung der Splitgruppe 36 in Verbindung mit einer Gangrückschaltung, wobei beispielsweise vom sechsten Gang in den dritten Gang des Gruppengetriebes 32 geschaltet wird.

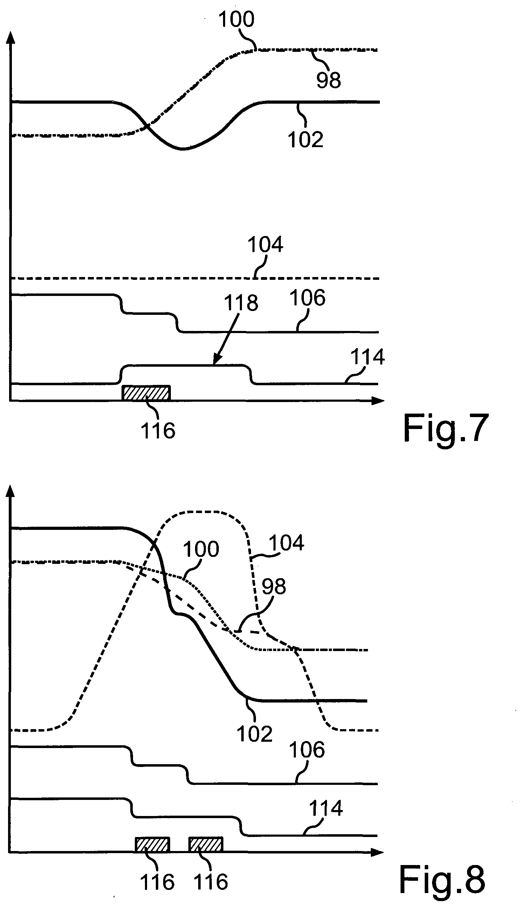

Fig. 6 und 7 veranschaulichen eine reine Rückschaltung der Splitgruppe 36, wobei beispielsweise von der zweiten Stufe in die erste Stufe der Splitgruppe 36 rückgeschaltet wird. Entweder wird die Eingangswelle 40 beschleunigt oder die Vorgelegewelle 50 verzögert. Beides ist möglich, allerdings bedingt das Verzögern der Vorgelegewelle 50 ein Auslegen des Gangs im Hauptgetriebe 34, so dass das Hauptgetriebe 34 in seine Neutralstellung beziehungsweise in Neutral geschaltet wird. Deswegen ist das Beschleunigen der Eingangswelle 40 über das Antriebsaggregat 48 bei ausgelegter Splitgruppe 36 und eingelegtem Gang im Hauptgetriebe 34 bevorzugt. Unter der ausgelegten Splitgruppe 36 ist zu verstehen, dass sich die Splitgruppe 36 beziehungsweise die Schiebemuffe 20 in der Neutralstellung befindet. Dabei kann die Anfahrkupplung 46, welche auch als Kupplung bezeichnet wird, während der gesamten Schaltung geschlossen bleiben. Für den Fall von geringen Drehzahlen, insbesondere geringer als die Leerlaufdrehzahl, wird das Beschleunigen der Eingangswelle 40 über ein Kupplungsmoment realisiert. Alternativ ist es möglich, die Vorgelegewelle 50 abzubremsen.

In den in Fig. 6 und 7 gezeigten Diagrammen veranschaulicht ein durchgezogener Verlauf 98 die Drehzahl des Antriebsaggregats 48 beziehungsweise der Abtriebswelle 96. Ein gestrichelter Verlauf 100 veranschaulicht die Drehzahl der Eingangswelle 40. Da gemäß Fig. 6 die Kupplung geschlossen bleibt und demzufolge die Eingangswelle 40 drehfest mit der Abtriebswelle 96 gekoppelt ist, entspricht der Verlauf 98 dem Verlauf 100. Ferner veranschaulicht ein Verlauf 102 die Drehzahl der Vorgelegewelle 50. Ein Verlauf 104 veranschaulicht die Betätigung der Kupplung. Da der Verlauf 104 in Fig. 6 und 7 konstant ist, wird die Kupplung nicht betätigt, wobei die Kupplung während der anhand von Fig. 6 und 7 veranschaulichten reinen Rückschaltung der Splitgruppe 36 geschlossen bleibt. Ein Verlauf 106 veranschaulicht die Schaltung der Splitgruppe 36 beziehungsweise die Verschiebung oder Stellung der Schiebemuffe 20. Dabei veranschaulicht ein Bereich 108 des Verlaufs 106 die zweite Stufe, ein Bereich 110 des Verlaufs 106 die Neutralstellung und ein Bereich 112 des Verlaufs 106 die erste Stufe der Splitgruppe 36. Somit ist anhand des Verlaufs 106 erkennbar, dass die Splitgruppe 36 von der zweiten Stufe (Bereich 108) über die Neutralstellung (Bereich 110) in die erste Stufe (Bereich 112) geschaltet wird.

Darüber hinaus veranschaulicht ein Verlauf 114 die Schaltung des Hauptgetriebes 34. Da der Verlauf 114 in Fig. 6 konstant ist, erfolgt keine Schaltung beziehungsweise kein Schaltvorgang des Hauptgetriebes 34.

Fig. 6 veranschaulicht dabei das Beschleunigen der Eingangswelle 40 mittels des Antriebsaggregats 48 bei geschlossener Kupplung und ausgelegter Splitgruppe 36. Fig. 7 veranschaulicht das zuvor erwähnte Abbremsen der Vorgelegewelle 50 mittels der Vorgelegewellenbremse, die durch einen Block 116 veranschaulicht ist. Anhand des Verlaufs 114 ist erkennbar, dass hierbei kurz eine Schaltung des Hauptgetriebes 34 durchgeführt wird. Gemäß Fig. 6 bleibt ein Gang des Hauptgetriebes 34 beim Rückschalten der Splitgruppe 36 eingelegt. Gemäß Fig. 7 wird dieser Gang kurz ausgelegt, so dass das Hauptgetriebe 34 kurz in seine durch einen Bereich 118 des Verlaufs 114 veranschaulichte Neutralstellung geschaltet wird. Daraufhin wird der Gang wieder eingelegt. Mit anderen Worten veranschaulicht der Block 116 das Aktivieren der Vorgelegewellenbremse, wodurch die Vorgelegewelle 50 mittels der Vorgelegewellenbremse abgebremst beziehungsweise verzögert, das heißt in ihrer Drehzahl reduziert wird.

Fig. 8, 9 und 10 veranschaulichen eine Rückschaltung der Splitgruppe 36 in Verbindung mit einer Ganghochschaltung, wobei beispielsweise von einem zweiten Gang in einen dritten Gang oder von einem zweiten Gang in einen fünften Gang des Gruppengetriebes 32 geschaltet wird. Hierbei benötigt die Splitgruppe 36 ein Beschleunigen der Eingangswelle 40 oder ein Verzögern der Vorgelegewelle 50. Der entsprechende Gang beziehungsweise die Ganghochschaltung benötigt ein Verzögern der Vorgelegewelle 50. Die Anschlussdrehzahl der Gesamtübersetzung erfordert ein Verzögern des Antriebsaggregats 48 beziehungsweise der Abtriebswelle 96. Es sind daher mehrere Alternativen möglich.
Bei einer ersten, in Fig. 8 veranschaulichten der Alternativen wird zunächst die Vorgelegewelle 50 bei ausgelegter Splitgruppe 36 und ausgelegtem Gang des Hauptgetriebes 34 zur Synchronisation der Splitgruppe 36 verzögert. Nach Einlegen der Splitgruppe 36, das heißt nach dem Einlegen einer der Stufen der Splitgruppe 36, wird die Vorgelegewelle 50 weiter verzögert zur Synchronisation des Gangs des Hauptgetriebes 34 und dieser Gang wird eingelegt, wobei die Kupplung offen ist.

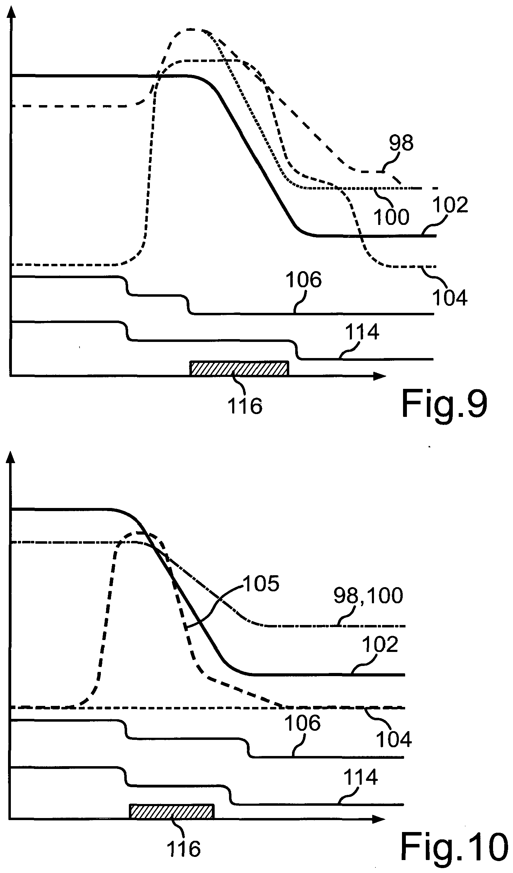

Bei einer zweiten, in Fig. 9 veranschaulichten der Alternativen wird zunächst die Eingangswelle 40 bei geschlossener Kupplung und ausgelegter Splitgruppe 36 beschleunigt. Nach erfolgter Synchronisation des Antriebsaggregats 48 wird die Splitgruppe 36 eingelegt. Dann wird die Kupplung geöffnet, um eine schnelle Synchronisation der Vorgelegewelle 50 mittels der Vorgelegewellenbremse zu erhalten. Parallel wird das Antriebsaggregat 48 auf Zieldrehzahl gebracht. Dann wird der Gang eingelegt und die Kupplung wird geschlossen.

Bei einer dritten der Alternativen, die in Fig. 10 veranschaulicht ist, werden die Splitgruppe 36 und der Gang beziehungsweise das Hauptgetriebe 34 bei geschlossener Kupplung ausgelegt. Parallel erfolgt eine Synchronisation des Hauptgetriebes 34 mittels der Vorgelegewellenbremse und mittels des Antriebsaggregats 48. Ist der Gang synchronisiert, so wird er eingelegt. Dann, wenn das Antriebsaggregat 48 synchronisiert ist, wird die Splitgruppe 36 eingelegt. Die Kupplung bleibt prinzipiell geschlossen, könnte aber etwa zum Zweck des leichteren Neutralstellens, insbesondere des Hauptgetriebes 34, geöffnet werden. In Fig. 10 ist ein Verlauf 105 gezeigt, welcher gegenüber dem Verlauf 104 eine alternative Betätigung der Kupplung veranschaulicht.

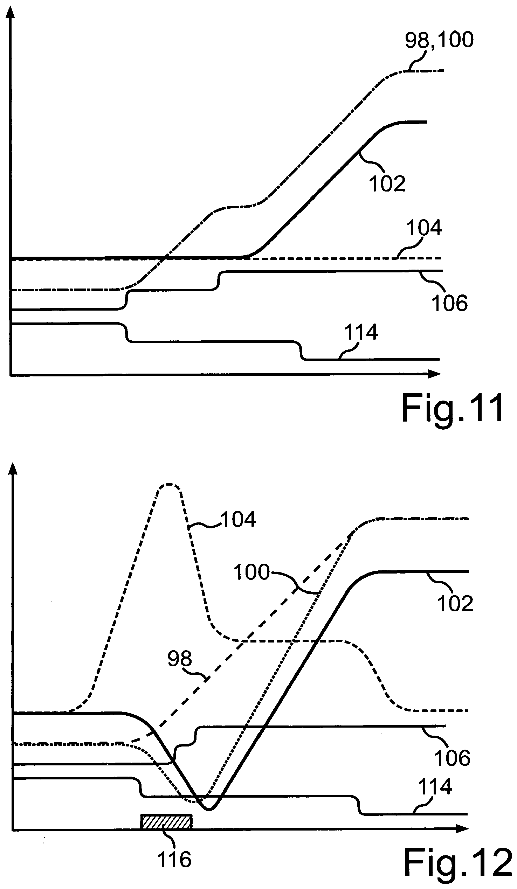

Fig. 11 und 12 veranschaulichen eine Rückschaltung der Splitgruppe 36 in Verbindung mit einer Gangrückschaltung, wobei beispielsweise eine Rückschaltung von einem sechsten in einen dritten Gang erfolgt. Hierbei benötigt die Splitgruppe 36 eine Beschleunigung der Eingangswelle 40 oder eine Verzögerung der Vorgelegewelle 50. Der einzulegende Gang, insbesondere des Hauptgetriebes 34, benötigt eine Beschleunigung der Vorgelegewelle 50.

Gemäß Fig. 1 bleibt die Kupplung beispielsweise geschlossen. Die Splitgruppe 36 wird ausgelegt und die Eingangswelle 40 wird über das Antriebsaggregat 48 auf Zieldrehzahl der Splitgruppe 36 beschleunigt. Dann wird die Splitgruppe 36 eingelegt. Spätestens jetzt wird der Gang ausgelegt, was jedoch auch parallel zum Auslegen der Splitgruppe 36 erfolgen kann. Die Antriebsmaschine (Antriebsaggregat 48) wird weiter beschleunigt auf die Zieldrehzahl des Gangs, der dann eingelegt wird.

Fig. 12 veranschaulicht, dass die Kupplung geöffnet und der Gang ausgelegt wird. Die Vorgelegewelle 50 und die Eingangswelle 40 werden über die Vorgelegewellenbremse auf ein niedriges Drehzahlniveau verzögert. Parallel wird das Antriebsaggregat 48 auf Zieldrehzahl des Gangs beschleunigt. Dann wird die Splitgruppe 36 bei niedriger Drehzahl durchgeschaltet. Die Kupplung wird geschlossen und die Eingangswelle 40 und die Vorgelegewelle 50 werden auf Zieldrehzahl des Gangs beschleunigt, welcher dann eingelegt wird. Für eine etwaige Integration der Rangegruppe 66 beziehungsweise einer Schaltung der Rangegruppe 66 in die oben geschilderten Schaltvorgänge gilt, dass beispielsweise die Splitgruppe 36 dann geschaltet wird, wenn das Drehzahlniveau am niedrigsten ist, das heißt beispielsweise wird zuerst eine Klaue beziehungsweise eine Klauenkupplung der Rangegruppe 66 abgebremst. Dadurch wird die ohnehin kleine Drehzahldifferenz der Splitgruppe 36 noch kleiner und liegt somit bevorzugt unter einer für Festigkeit und Geräusch kritischen Grenze. Die Integration der Rangegruppe 66 für eine synchronisierte Rangegruppe 66 kann dagegen unabhängig erfolgen, da die synchronisierte Rangegruppe 66 durch eigene Synchronisiermittel unabhängig vom Hauptgetriebe 34 synchronisiert wird.

## Patentansprüche

1. Gruppengetriebe (32) für einen Kraftwagen, insbesondere einen Nutzkraftwagen, mit einem Hauptgetriebe (34) und einer dem Hauptgetriebe (34) vorgeschalteten Splitgruppe (36),
**dadurch gekennzeichnet, dass**
die Splitgruppe (36) für Hochschaltungen der Splitgruppe (36) synchronisiert und für Rückschaltungen der Splitgruppe (36) unsynchronisiert ist.

2. Gruppengetriebe (32) nach Anspruch 1,
**dadurch gekennzeichnet, dass**
das Hauptgetriebe (34) unsynchronisiert ist.

3. Gruppengetriebe (32) nach Anspruch 1 oder 2,
**dadurch gekennzeichnet, dass**
die Splitgruppe (36) genau zwei schaltbare Stufen aufweist.

4. Gruppengetriebe (32) nach einem der vorhergehenden Ansprüche,
**dadurch gekennzeichnet, dass**
das Gruppengetriebe (32) eine dem Hauptgetriebe (34) nachgeschaltete Rangegruppe (66) aufweist.

5. Gruppengetriebe (32) nach Anspruch 4,
**dadurch gekennzeichnet, dass**
die Rangegruppe (66) synchronisiert oder unsynchronisiert ist.

6. Gruppengetriebe (32) nach einem der vorhergehenden Ansprüche,
**dadurch gekennzeichnet, dass**
eine Klauenkupplung vorgesehen ist, mittels welcher ein drehfest mit einer Welle (40) des Gruppengetriebes (32) verbundenes erstes Zahnrad (14) der Splitgruppe (36) bei der Rückschaltung dieser mit einem drehbar auf der Welle (40) angeordneten zweiten Zahnrad (44) der Splitgruppe (36) drehfest koppelbar ist.

7. Gruppengetriebe (32) nach Anspruch 6,
**dadurch gekennzeichnet, dass**
die Klauenkupplung eine Flachverzahnung aufweist.

8. Verfahren zum Schalten eines Gruppengetriebes (32) nach einem der vorhergehenden Ansprüche,
**dadurch gekennzeichnet, dass**
eine Rückschaltung der Splitgruppe (36) durchgeführt wird, wobei eine Getriebeeingangswelle (40) der Splitgruppe (36) beschleunigt oder eine Vorgelegewelle (50) des Gruppengetriebes (32) verzögert wird.

9. Verfahren nach Anspruch 8,
**dadurch gekennzeichnet, dass**
bei der Rückschaltung der Splitgruppe (36) ein Gangwechsel des Hauptgetriebes (34) unterbleibt oder eine Hochschaltung des Hauptgetriebes (34) durchgeführt wird oder eine Rückschaltung des Hauptgetriebes (34) durchgeführt wird.

## Claims

1. Range-change gearbox (32) for a motor vehicle, in particular a commercial vehicle, with a main gearbox (34) and a splitter group (36) upstream of the main gearbox (34),
**characterised in that**
the splitter group (36) is synchronised for upshifting the splitter group (36) and unsynchronised for downshifting the splitter group (36).

2. Range-change gearbox (32) according to claim 1,
**characterised in that**
the main gearbox (34) is unsynchronised.

3. Range-change gearbox (32) according to claim 1 or 2,
**characterised in that**
the splitter group (36) has precisely two shiftable stages.

4. Range-change gearbox (32) according to any of the preceding claims, **characterised in that**
the splitter group (36) has a range group (34) downstream of the main gearbox (34).

5. Range-change gearbox (32) according to claim 4,
**characterised in that**
the range group (34) is synchronised or unsynchronised.

6. Range-change gearbox (32) according to any of the preceding claims,
**characterised in that**
a dog clutch is provided, by means of which a first gear (14) of the splitter group (36), which is non-rotatably joined to a shaft (40) of the range-change gearbox (32), can in the downshifting thereof be coupled non-rotatably to a second gear (44) of the splitter group (36), which is rotatably mounted in the shaft (40).

7. Range-change gearbox (32) according to claim 6,
**characterised in that**
the dog clutch has a flat toothing.

8. Method for shifting a range-change gearbox (32) according to any of the preceding claims,
**characterised in that**
a downshift of the splitter group (36) is carried out, wherein a gearbox input shaft (40) of the splitter group (36) is accelerated or a layshaft (50) of the splitter group (36) is decelerated.

9. Method according to claim 8,
**characterised in that**
in the downshifting of the splitter group (36) a gear change of the main gearbox (34) is stopped or an upshifting of the main gearbox (34) is carried out or a downshifting of the main gearbox (34) is carried out.

## Revendications

1. Engrenage en groupe (32) pour un véhicule à moteur, notamment un véhicule utilitaire, avec un engrenage principal (34) et un groupe amont (36) monté en amont de l'engrenage principal (34),
**caractérisé en ce que**
le groupe amont (36) est synchronisé pour des passages à la vitesse supérieure du groupe amont (36) et désynchronisé pour des passages à la vitesse inférieure du groupe amont (36).

2. Engrenage en groupe (32) selon la revendication 1,
**caractérisé en ce que**
l'engrenage principal (34) est désynchronisé.

3. Engrenage en groupe (32) selon la revendication 1 ou 2,
**caractérisé en ce que**
le groupe amont (36) présente exactement deux vitesses commutables.

4. Engrenage en groupe (32) selon une des revendications précédentes,
**caractérisé en ce que**
l'engrenage en groupe (32) présente un groupe à gammes (66) monté en aval de l'engrenage principal (34).

5. Engrenage en groupe (32) selon la revendication 4,
**caractérisé en ce que**
le groupe à gammes (66) est synchronisé ou désynchronisé.

6. Engrenage en groupe (32) selon une des revendications précédentes,
**caractérisé en ce que**
un accouplement à griffes est prévu, au moyen duquel une première roue dentée (14) connectée de manière fixe en rotation à un arbre (40) de l'engrenage en groupe (32) du groupe amont (36) peut être accouplée de manière fixe en rotation lors du passage à la vitesse inférieure de celui-ci à une seconde roue dentée (44) disposée de manière rotative sur l'arbre (40) du groupe amont (36).

7. Engrenage en groupe (32) selon la revendication 6,
**caractérisé en ce que**
l'accouplement à griffes présente une denture plate.

8. Procédé de commutation d'un engrenage en groupe (32) selon une des revendications précédentes,
**caractérisé en ce que**
un passage à la vitesse inférieure du groupe amont (36) est réalisé, dans lequel un arbre d'entrée d'engrenage (40) du groupe amont (36) est accéléré ou un arbre intermédiaire (50) de l'engrenage en groupe (32) est ralenti.

9. Procédé selon la revendication 8,
**caractérisé en ce que**
un changement de vitesse de l'engrenage principal (34) n'a pas lieu lors du passage à la vitesse inférieure du groupe amont (36) ou un passage à la vitesse supérieure de l'engrenage principal (34) est réalisé ou un passage à la vitesse inférieure de l'engrenage principal (34) est réalisé.
